# EUROPÄISCHE PATENTSCHRIFT

(11) **EP 0 538 711 B1**
(45) Veröffentlichungstag und Bekanntmachung des Hinweises auf die Patenterteilung: **24.05.1995**
(21) Anmeldenummer: 92117447.0
(22) Anmeldetag: 13.10.1992
(51) Int. Cl.: B29C 45/18, B29C 31/02, B65G 53/24

(54) **Vorrichtung zur Förderung von körnigen und/oder pulvrigen Feststoffen**
Device for conveying granular and/or powdery solid matters
Dispositif pour convoyer des corps solides granuleux et/ou pulvérulents

(30) Priorität: 22.10.1991 DE 4134824
(43) Veröffentlichungstag der Anmeldung: 28.04.1993
(73) Patentinhaber: Battenfeld Kunststoffmaschinen Ges.m.b.H., A-2542 Kottingbrunn (AT)
(72) Erfinder: Heindl, Friedrich, A-2500 Baden (AT); Huber, Anton, Dipl.-Ing., A-2560 Berndorf (AT); Bleier, Harald, A-2700 Wr. Neustadt (AT)
(74) Vertreter: Müller, Gerd, Dipl.-Ing.

(56) Entgegenhaltungen:
- AT-B- 352 385
- DE-A- 2 409 128
- DE-A- 3 900 664
- DE-B- 2 430 243
- FR-A- 2 599 009

## Beschreibung

Die Erfindung betrifft eine Vorrichtung zur Förderung von körnigen und/oder pulvrigen Feststoffen, wie Kunststoffgranulat oder dergleichen, aus einem Speichersilo in einen einer Verarbeitungsstation, insbesondere einem Plastifizierzylinder des Extruders einer Spritzgießmaschine, vorgelagerten Vorratsbehälter, bei welcher der Speichersilo oder dergleichen mit dem Vorratsbehälter ständig durch einen Schlauch oder ein Rohr in Verbindung steht.

Eine solche Vorrichtung ist aus der DE-A-3 900 664 bekannt.

Nach der Erfindung soll dabei eine Materialfördervorrichtung bzw. ein Materialfördergerät bereitgestellt werden, die bzw. das bei geringem baulichen Aufwand dauerhaft funktionssicher arbeitet, und zwar unabhängig davon, auf welchem Niveau sich der Stand- bzw. Einbauort des Speichersilos oder dergleichen relativ zu dem ein kleineres Fassungsvolumen aufweisenden Vorratsbehälter befindet.

Zur Lösung dieser Aufgabe sieht die Erfindung vor, daß das eine Ende des Schlauches bzw. Rohres ständig - vorzugsweise von oben her - in die im Speichersilo oder dergleichen befindlichen Feststoffe eintaucht, daß das zweite Ende des Schlauches bzw. Rohres in den Vorratsbehälter ausmündet, und daß diesem zweiten Ende des Schlauches bzw. Rohres eine an den Vorratsbehälter oberhalb seines Vorratsraumes unter Zwischenschaltung eines Filters angeschlossen Gas- bzw. Luftstrahlpumpe zugeordnet ist.

Das mindestens in eine Düse eintretende Arbeitsmedium - Gas oder Luft - erzeugt durch Erhöhung seiner Geschwindigkeit im Vorratsraum des Vorratsbehälters, im Schlauch bzw. Rohr sowie in den im Speichersilo gelagerten körnigen und/oder pulvrigen Feststoffen einen so hohen Unterdruck, daß die Feststoffe unter Mischung mit dem Saugluftstrom mit dem Speichersilo oder dergleichen zum Vorratsraum des Vorratsbehälters hin angesaugt werden. Im Vorratsbehälter werden dann die Feststoffe durch einen Filter vom Saugluftstrom abgetrennt. Letzterer wird in der Gas- bzw. Luftstrahlpumpe mit dem Arbeitsmedium gemischt und tritt zusammen mit diesem ins Freie. Da bei der Expansion des Treibmediums in der Düse der Gas- bzw. Luftstrahlpumpe eine hohe Verdichtung erreichbar ist, läßt sich innerhalb der gesamten Fördervorrichtung bzw. des Fördergerätes ein entsprechend hoher Unterdruck erreichen und damit ein optimaler Transport der körnigen und/oder pulvrigen Feststoffe vom Speichersilo oder dergleichen aus zum Vorratsbehälter hin sicher erstellen.

In ausgestaltender Weiterbildung der Erfindung wird die Luftstrahlpumpe von in einen Verschlußdeckel des Vorratsbehälters integrierten Düsensystemen, insbesondere Venturie-Düsen oder auch Laval-Düsen, gebildet ist und daß die Saugseite der Gas- bzw. Luftstrahlpumpe aus Öffnungen in der Unterseite dieses Verschlußdeckels besteht, die unter Zwischenschaltung des Filter an das obere Ende des Vorratsbehälters angeschlossen sind.

Die die Saugseite der Gas- bzw. Luftstrahlpumpe bildenden Öffnungen im Verschlußdeckel umgeben erfindungsgemäß vorzugsweise den Durchgang für das zweite Ende des Schlauches oder Rohres ringsekmentartig und die Filter sind in einem zwischen dem Verschlußdeckel und dem oberen Ende des Vorratsbehälters einsetzbaren Träger angeordnet.

Bewährt hat sich erfindungsgemäß auch ein Aufbau, bei dem die Gas- bzw. Luftstrahlpumpe als Verschlußdeckel-Baugruppe über Schnellverschlüsse mit der Vorratsbehälter-Baugruppe in leicht lösbare Verbindung bringbar ist, während der Schlauch oder das Rohr der Speichersilo-Baugruppe durch die Verschlußdeckel-Baugruppe in die Vorratsbehälter-Baugruppe eingeführt ist und dabei die zwischen der Verschlußdeckel-Baugruppe und der Vorratsbehälter-Baugruppe lösbar eingespannte Filter-Baugruppe durchsetzt.

Schließlich hat es sich nach Erfindung bei einer ein Plastifizierzylinder des Extruders einer Spritzgießmaschine zugeordneten Fördervorrichtung für körnige und/oder pulvrige Feststoffe erfindungsgemäß noch als wichtig erwiesen, daß einerseits die Vorratsbehälter-Baugruppe luftdicht auf dem Plastifizierzylinder sitzt und andererseits die Plastifizierschnecke des Extruders im Plastifizierzylinder in Abdichtungen läuft.

Vorteilhaft bei einer erfindungsgemäßen Fördervorrichtung bzw. einem erfindungsgemäßen Fördergerät ist nicht nur eine kleine und kompakte Bauweise des den Feststoff-Förderstrom erzeugenden Antriebssystems. Vielmehr ist auch wesentlich, daß das den Feststoff-Förderstrom erzeugende Antriebsmedium, bspw. das Druckgas oder die Druckluft, nicht mit dem Fördergut in Berührung kommen und daher das in ihm enthaltene Öl bzw. Wasser auch nicht hieran übertragen kann. Unerwünschte Zustandsänderungen der aus dem Speichersilo oder dergleichen in den Vorratsraum des Vorratsbehälters transportierten Feststoffe lassen sich daher sicher vermeiden.

In der Zeichnung ist ein Ausführungsbeispiel des Gegenstandes der Erfindung dargestellt. Es zeigen
- Figur 1: im Längsschnitt den Plastifizierextruder einer Kunststoff-Spritzgießmaschine mit einer auf seinem Plastifizierzylinder angeordneten Fördervorrichtung für Kunststoffgranulat oder dergleichen und
- Figur 2: in größerem Maßstab und teilweise geschnittener räumlicher Sprengdarstellung den erfindungswesentlichen Aufbau der dem Plastifizierextruder zugeordneten Fördervorrichtung für das Kunststoffgranulat oder dergleichen.

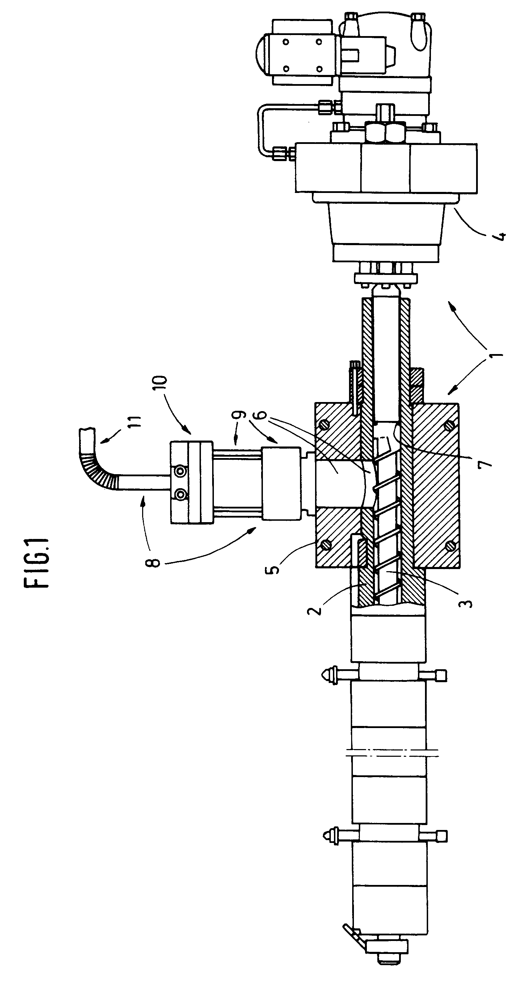

In Figur 1 der Zeichnung ist ein Plastifizierextruder 1 zu sehen, wie er üblicherweise zu der Beschickung von Kunststoffspritzgießmaschinen zum Einsatz gelangt.

Dieser Plastifizierextruder 1 besteht dabei im wesentlichen aus dem Plastifizierzylinder 2, einer in dessen Innerem drehbar gelagerten Plastifizierschnecke 3 und einer Antriebseinheit 4, mit der die Plastifizierschnecke 3 innerhalb des Plastifizierzylinders 2 drehangetrieben werden kann.

Zu sehen ist in Figur 1 ferner, daß der Plastifizierzylinder 2 in der Nähe seines hinteren Endes mit einem Materialeinzug 5 versehen ist, der eine zu Plastifizierschnecke 3 hin führende Einzugsöffnung 6 hat.

Angedeutet ist in Figur 1 aber auch, daß die Plastifizierschnecke 3 im Plastifizierzylinder 2 zwischen dem Materialeinzug 5 bzw. dessen Einzugsöffnung 6 und der Antriebseinheit 4 in Abdichtungen 7 läuft.

Auf dem Materialeinzug 5, und zwar im Anschluß an dessen Einzugsöffnung 6 ist schließlich noch eine Fördervorrichtung bzw. ein Fördergerät 8 angeordnet, welches dazu dient, dem Materialeinzug 5 körnige und/oder pulvrige Feststoffe, insbesondere Kunststoffgranulat oder dergleichen, zuzuführen, damit diese bzw. dieses vom Plastifizierextruder 1 verarbeitet werden kann.

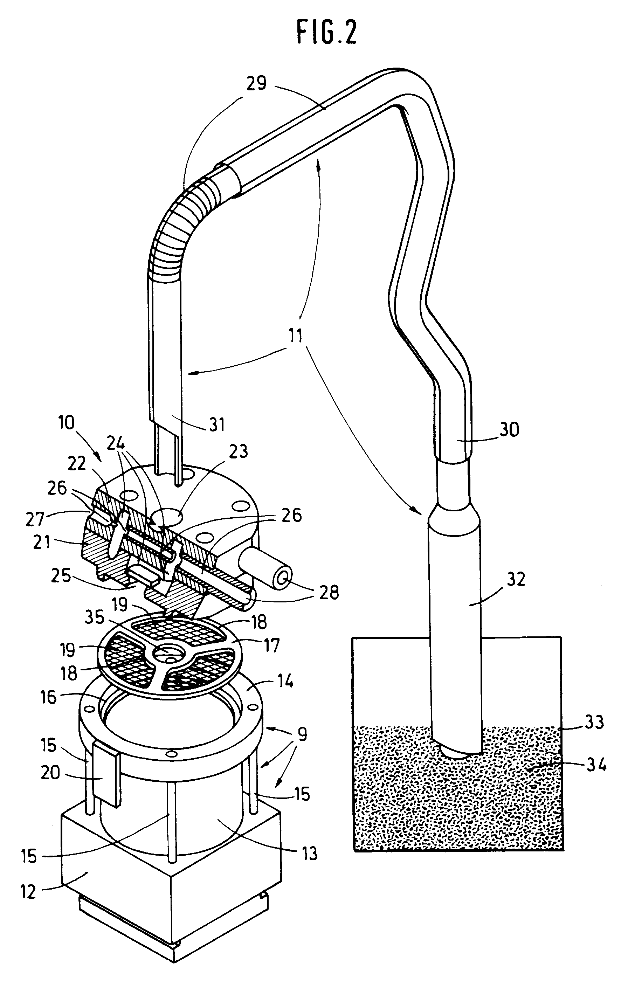

Die Fördervorrichtung bzw. das Fördergerät 8 ist in Figur 2 der Zeichnung deutlicher, und zwar in einer teilweise geschnittenen Sprengdarstellung gezeigt. Dabei besteht die Fördervorrichtung bzw. das Fördergerät 8 im wesentlichen aus drei verschiedenen Baugruppen 9, 10 und 11, die zum Zwecke ihrer Zusammenarbeit miteinander verbunden bzw. verbindbar sind.

Die Baugruppe 9 bildet dabei einen oberhalb der Einzugsöffnung 6 auf dem Materialeinzug 5 des Plastifizierextruders 1 montierten Vorratsbehälter für die vom Plastifizierextruder 1 zu verarbeitenden Feststoffe. Sie wird gebildet von einem auf den Materialeinzug 5 aufsetzbarem Übergangsstück 12, einem von diesem getragenen Rohrstutzen 13 und einem wiederum hierauf sitzenden Klemmring 14, an dem wiederum Zuganker 15 angreifen, die vom Übergangsstück 12 hochragen.

Im Klemmring 14 bzw. am oberen Ende des Rohrstutzens 13 befindet sich eine Aufnahme 16 für einen als Speichenring ausgeführten Träger 17, welcher bspw. ringsegmentförmige Ausschnitte 18 zur Aufnahme von Filtern 19 aufweist.

Die zweite Baugruppe 10 ist als eine Verschlußdeckel-Baugruppe ausgeführt, welche sich auf das obere Ende der Vorratsbehälter-Baugruppe 1 aufsetzen läßt und mit deren Klemmring 14 über Schnellverschlüsse 20 lösbar gekuppelt werden kann.

Die Deckel-Baugruppe 10 ist aus einem Unterteil 21 und einem Oberteil 22 zusammengesetzt, die einen gemeinsamen, zentralen Durchlaß 23 einschließen. Darüberhinaus grenzen Unterteil 21 und Oberteil 22 der Deckel-Baugruppe 10 zwischen sich eine Saugkammer 24 ein, die mit an der Unterseite des Unterteils 21 liegenden Saugöffnungen 25 versehen ist.

In dem Oberteil 22 der Deckel-Baugruppe 10 sind horizontal ausgerichtete Düsensysteme 26, bspw. Venturie-Rohre oder auch Laval-Düsen, integriert, die innerhalb des Oberteils 22 jeweils eine Wirkverbindung mit der Saugkammer 24 haben. Jedes Düsensystems 26 weist dabei eine Eintrittsseite 27 und eine Austrittsseite 28 auf, die an voneinander abgewendeten Umfangsseiten der Deckel-Baugruppe 10 gelegen sind, wie das deutlich aus Figur 2 entnommen werden kann.

Erkennbar ist aus Figur 2 der Zeichnung ferner, daß die Düsensysteme 26 in der Deckel-Baugruppe 10 eine Anordnung haben, bei der sie etwa tangential an dem zentralen Durchlaß 23 vorbeigehen.

Nach der Fixierung der Deckel-Baugruppe 10 auf der Vorratsbehälter-Baugruppe 9 stehen die Saugöffnungen 25 der Saugkammer 24 durch die in den Ausschnitten 18 des Speichenring-Trägers 17 angeordneten Filter 19 mit dem Rohrstutzen 13 in ständiger Verbindung.

Die dritte Baugruppe 11 der Fördervorrichtung bzw. des Fördergerätes 8 weist eine Schlauch- und/oder Rohrleitung 29 mit einem ersten Ende 30 und einem zweiten Ende 31 auf, die an ihrem ersten Ende 30 mit einer Sauglanze 32 in Verbindung steht, die in einen Speichersilo 33 hineinragt und dabei ständig in darin enthaltene körnige und/oder pulvrige Feststoffe, bspw. Kunststoffgranulat 34 eintaucht.

Mit ihrem zweiten Ende 31 wird die Schlauch- und/oder Rohrleitung 29 der Speichersilo-Baugruppe 11 durch den zentralen Durchlaß 23 der Deckel-Baugruppe 10 und eine Zentralöffnung 35 des speichenringförmigen Trägers 17 von oben her bis in den Rohrstutzen 13 der Vorratsbehälter-Baugruppe 9 eingeführt. Dabei ist es wichtig, wenn das zweite Ende 31 der Schlauch- und/oder Rohrleitung 29 um ein gewisses Mindestmaß über die Unterseite des speichenringförmigen Trägers 17 hinausragt, in dessen Ausschnitten 18 die Filter 19 sitzen.

Zum Betrieb der Fördervorrichtung bzw. des Fördergerätes 8 wird Druckgas oder Druckluft an der Eintrittsseite 27 der Düsensysteme 26 zugeführt, die, wie bereits erwähnt wurde, die Wirkungsweise von Venturierohren oder Laval-Düsen haben. Da diese Düsensysteme 26 die Saugkammer 24 in der Verschlußdeckel-Baugruppe 10 durchsetzen, wird hierin ein relativ hoher Unterdruck erzeugt, der sich durch die Saugöffnungen 25 und die Filter 19 in den Vorratsraum der Vorratsbehälter-Baugruppe 9 sowie von dort aus durch die Schlauch- und/oder Rohrleitung 29 und die Sauglanze 32 bis in den Speichersilo 33 fortpflanzt.

Da der Speichersilo 33 unter Atmosphärendruck steht bzw. mit der Umgebungsluft ständig verbunden ist, stellt sich in der Sauglanze 32 sowie in der Schlauch- und/oder Rohrleitung 29 eine Saugzug-Wirkung ein, weil über die Düsensysteme 26 sowie die Saugkammer 24 ständig Luft aus dem Inneren der Vorratsbehälter-Baugruppe 9 abgezogen wird. Diese Saugluft gelangt dabei an der Austrittsseite 28 der Düsensysteme 26 zusammen mit dem Arbeitsmedium, also dem Gas- oder der Luft in die Atmosphäre.

Wichtig bei der Fördervorrichtung bzw. dem Fördergerät 8 ist, daß der Vorgang der Materialförderung praktisch ohne den Einsatz irgendwelcher mechanisch bewegter Funktionsteile stattfindet und dabei das primäre Fördermedium, nämlich das Druckgas oder die Druckluft, mit den zu fördernden Feststoffen, bspw. dem Kunststoffgranulat 34 zu keiner Zeit Kontakt hat. Im primären Fördermedium enthaltenes Öl oder Wasser kann daher keinerlei nachteiligen Einfluß auf die der Vorratsbehälter-Baugruppe 9 zugeführten Feststoffe nehmen.

Die als sekundäres Fördermedium für die Feststoffe wirksame Saugluft, wird erst oberhalb der Filter 19 von dem unter Druck stehenden und als primäres Fördermedium dienenden Gas bzw. der Luft beaufschlagt und tritt dann unmittelbar zusammen hiermit an der Austrittsseite 28 der Düsensysteme 26 in die Atmosphäre.

Da einerseits die Vorratsbehälter-Baugruppe 9 luftdicht auf dem Materialeinzug 5 des Plastifizierzylinders 2 am Plastifizierextruder 1 aufgesetzt ist und andererseits die Plastifizierschnecke 3 im Plastifizierzylinder 2 in den Abdichtungen 7 läuft, wird auf einfache Art und Weise verhindert, daß Saugluft auf einem anderen Wege als durch die Schlauch- und/oder Rohrleitungen 29 in den Vorratsraum der Vorratsbehälter-Baugruppe 9 gelangen kann.

## Patentansprüche

1. Vorrichtung zur Förderung von körnigen und/oder pulvrigen Feststoffen, wie Kunststoffgranulat aus einem Speichersilo (33) in einen einer Verarbeitungsstation, insbesondere einem Plastifizierzylinder (2) des Extruders einer Spritzgießmaschine vorgelagerten Vorratsbehälter (9), bei welcher der Speichersilo (33) mit dem Vorratsbehälter ständig durch eine Schlauch- und/oder Rohrleitung in Verbindung steht,
**dadurch gekennzeichnet,**
daß das eine Ende (30) der Schlauch- und/oder Rohrleitung (29) ständig - vorzugsweise von oben her - in die im Speichersilo (33) befindlichen Feststoffe (34) eintaucht, daß das zweite Ende (31) der Schlauch- und/oder Rohrleitung (29) in den Vorratsbehälter (9) ausmündet, und daß diesem zweiten Ende (31) der
Schlauch- und/oder Rohrleitung (29) eine an den Vorratsbehälter (9) oberhalb seines Vorratsraumes (12) unter Zwischenschaltung eines Filters (19) angeschlossene Gas- bzw. Luftstrahlpumpe (24 bis 28) zugeordnet ist.

2. Vorrichtung nach Anspruch 1,
**dadurch gekennzeichnet,**
daß die Gas- bzw. Luftstrahlpumpe (24 bis 28) von in einen Verschlußdeckel (10) des Vorratsbehälters (9) integrierten Düsensystemen (26 bis 28), insbesondere Venturierohren oder Laval-Düsen gebildet ist, und daß die Saugseite der Gas- bzw. Luftstrahlpumpe (24 bis 28) aus Öffnungen (25) in der Unterseite dieses Verschlußdeckels (10) besteht, die unter Zwischenschaltung des Filters (19) an das obere Ende des Vorratsbehälters (9) angeschlossen sind.

3. Vorrichtung nach einem der Ansprüche 1 und 2,
**dadurch gekennzeichnet,**
daß die die Saugseite der Gas- bzw. Luftstrahlpumpe (24 bis 28) bildenden Öffnungen (25) im Verschlußdeckel (10) den Durchgang (23) für das zweite Ende (31) der Schlauch- und/oder Rohrleitung (29) ringsegmentartig umgeben, und daß die Filter (19) in einem zwischen dem Verschlußdeckel (10) und dem oberen Ende des Vorratsbehälters (9) einsetzbaren Träger (17) angeordnet sind.

4. Vorrichtung nach einem der Ansprüche 1 bis 3,
**dadurch gekennzeichnet,**
daß die Gas- bzw. Luftstrahlpumpe (24 bis 28) als Verschlußdeckel-Baugruppe (10) über Schnellverschlüsse (20) mit der Vorratsbehälter-Baugruppe (9) in leicht lösbare Verbindung bringbar ist, während die Schlauch- und/oder Rohrleitung (29) der Speichersilo-Baugruppe (11) durch die Verschlußdeckel-Baugruppe (10) in die Vorratsbehälter-Baugruppe (9) eingeführt ist und dabei die zwischen der Verschlußdeckel-Baugruppe (10) und der Vorratsbehälter-Baugruppe (9) lösbar eingespannte Filter-Baugruppe (17 bis 19) durchsetzt (35)

5. Vorrichtung nach einem der Ansprüche 1 bis 4,
**dadurch gekennzeichnet,**
daß einerseits die Vorratsbehälter-Baugruppe (9) luftdicht auf dem Plastifizierzylinder (2) des Extruders (1) der Spritzgießmaschine sitzt und andererseits die Plastifizierschnecke (3) des Extruders im Plastifizierzylinder (2) in Abdichtungen (7) läuft.

## Claims

1. Device for the conveying of granular and/or pulverulent solid materials, such as plastics material granulate, from a storage silo (33) into a storage container (9) extending in front of a processing station, especially a plasticising cylinder (2) of the extruder of an injection moulding machine, in which the storage silo (33) stands in constant connection with the storage container through a hose duct and/or pipe duct, characterised thereby that the one end (30) of the hose duct and/or pipe duct constantly dips -preferably from above - into the solid material (34) disposed in the storage silo (33), that the second end (31) of the hose duct and/or pipe duct (29) opens into the storage container (9), and that this second end (31) of the hose duct and/or pipe duct (29) is associated with a gas or air injector (24 to 28) connected to the storage container (9) above the storage space thereof with interposition of a filter (19).

2. Device according to claim 1, characterised thereby that the gas or air injector (24 to 28) is formed by nozzle systems (26 to 28), especially Venturi tubes or Laval nozzles, integrated into a closure lid (10) of the storage container (9), and that the suction side of the gas or air injector (24 to 28) consists of openings (25) in the underside of this closure lid (10), which are connected to the upper end of the storage container (9) with interposition of the filter (19).

3. Device according to one of claims 1 and 2, characterised thereby that the openings (25), which form the suction side of the gas or air injector (24 to 28), in the closure lid (10) surround the passage (23) for the second end of the hose duct and/or pipe duct (29) in the manner of annular segments, and that the filters (19) are arranged in a carrier (19) insertable between the closure lid (10) and the upper end of the storage container (9).

4. Device according to one of claims 1 to 3, characterised thereby that the gas or air injector (24 to 28) can be brought, as a closure lid subassembly (10), into easily releasable connection with the storage container subassembly (9) by way of snap closures (20), whilst the hose duct and/or pipe duct (29) of the storage silo subassembly (11) is introduced into the storage container subassembly (9) by way of closure lid subassembly (10) and thus passes through (35) the filter subassembly (17 to 19) clamped-in between the closure lid subassembly (10) and the storage container subassembly (9).

5. Device according to one of claims 1 to 4, characterised thereby that on the one hand the storage container subassembly (9) is airtightly seated on the plasticising cylinder (2) of the extruder (1) of the injection moulding machine and on the other hand the plasticising worm (3) of the extruder in the plasticising cylinder (2) runs in the seals (7).

## Revendications

1. Dispositif pour transporter des matières solides sous forme de granules et/ou de poudre, telles qu'un granulat de matières synthétiques, à partir d'un silo de stockage (33) dans un réservoir de stockage (9) situé avant une installation de mise en oeuvre, en particulier un cylindre de préplastification (2) de l'extrudeuse d'une presse d'injection, le silo de stockage (33) étant relié en continu au réservoir de stockage via un tuyau flexible et/ou une conduite tubulaire, caractérisé en ce qu'une extrémité (30) du tuyau flexible et/ou de la conduite tubulaire (29) est plongée continuellement, de préférence à partir du dessus, dans les matières solides (34) se trouvant dans le silo de stockage (33), en ce que l'autre extrémité (31) du tuyau flexible et/ou de la conduite tubulaire (29) débouche dans le réservoir de stockage (9) et en ce que cette deuxième extrémité (31) du tuyau flexible et/ou de la conduite tubulaire (29) est reliée à une trompe à air ou à gaz (24 à 28) située sur le réservoir de stockage (9), au-dessus de son espace de stockage (12), en intercalant un filtre (19).

2. Dispositif selon la revendication 1, caractérisé en ce que la trompe à air ou à gaz (24 à 28) est formée par un système de tuyères (26 à 28) intégré dans le couvercle de fermeture (10) du réservoir de stockage (9), en particulier des tuyères de Venturi ou de Laval, et en ce que le côté aspiration de la trompe à gaz ou à air (24 à 28) est constitué par des ouvertures (25) situées dans la face inférieure de ce couvercle de fermeture (10), ledites ouvertures étant reliées à l'extrémité supérieure du réservoir de stockage (9) en intercalant le filtre (19).

3. Dispositif selon une quelconque des revendications 1 et 2, caractérisé en ce que les ouvertures (25) formant le côté aspiration de la trompe à air ou à gaz (24 à 28) dans le couvercle de fermeture (10) entourent le passage (23) pour la deuxième extrémité (31) du tuyau flexible et/ou de la conduite tubulaire (29) en formant des segments de cercle et en ce que les filtres (19) sont disposés dans un support (17) pouvant être placé entre le couvercle de fermeture (10) et l'extrémité supérieure du réservoir de stockage (9).

4. Dispositif selon une quelconque des revendications 1 à 3, caractérisé en ce que la trompe à air ou à gaz (24 à 28), sous forme d'une unité formant le couvercle de fermeture (10), peut être reliée facilement et de manière amovible via des fermetures rapides (20), à l'unité formant le réservoir de stockage (9) alors que le tuyau flexible et/ou la conduite tubulaire (29) de l'unité formant le silo de stockage (11) est introduit à travers l'unité formant le couvercle (10) dans l'unité formant le réservoir de stockage (9) et passe ainsi à travers l'unité formant le filtre (17 à 19) fixé de manière amovible entre l'unité formant le couvercle (10) et l'unité formant le réservoir de stockage (9).

5. Dispositif selon une quelconque des revendications 1 à 4, caractérisé en ce que d'une part, l'unité formant de réservoir de stockage (9) est placée de manière étanche à l'air sur le cylindre de préplastification (2) de l'extrudeuse (1) de la presse d'injection et en ce que d'autre part, la vis de préplastification (3) de l'extrudeuse passe dans des joints étanches (7) dans le cylindre de préplastification (2).
